(19) Europäisches Patentamt
European Patent Office
Office européen des brevets

(11) **EP 1 335 116 B1**

(12) **EUROPEAN PATENT SPECIFICATION**

(45) Date of publication and mention
of the grant of the patent:
**11.07.2007 Bulletin 2007/28**

(51) Int Cl.:
*F01N 3/00* (2006.01)    *F01N 5/00* (2006.01)
*F01N 3/08* (2006.01)

(21) Application number: **03001965.7**

(22) Date of filing: **30.01.2003**

(54) **Neutralizer and air conditioner using the same**

Neutralisierungsvorrichtung und Klimagerät

Neutraliseur et conditionneur d'air utilisant ce neutraliseur

(84) Designated Contracting States:
**FR GB IT**

(30) Priority: **08.02.2002 JP 2002031967**

(43) Date of publication of application:
**13.08.2003 Bulletin 2003/33**

(73) Proprietors:
• **SANYO ELECTRIC CO., LTD.**
**Moriguchi-shi, Osaka (JP)**
• **Sanyo Electric Air Conditioning Co., Ltd.**
**Ashikaga-shi,**
**Tochigi (JP)**

(72) Inventors:
• **Mochizuki, Takashi**
**Kumagaya-shi,**
**Saitama (JP)**

• **Takamatsu, Masaki**
**Ora-gun,**
**Gunma (JP)**
• **Yoshii, Shigeru**
**Ora-gun,**
**Gunma (JP)**
• **Arai, Hiroshi**
**Kiryu-shi,**
**Gunma (JP)**

(74) Representative: **Glawe, Delfs, Moll**
**Patentanwälte**
**Postfach 26 01 62**
**80058 München (DE)**

(56) References cited:
WO-A-81/00277          GB-A- 1 357 034
US-A- 3 391 521        US-A- 3 998 613
US-A- 4 282 017        US-A- 4 399 107
US-A- 4 476 092

## Description

BACKGROUND OF THE INVENTION

1. Field of the Invention

The present invention relates to a neutralizer for neutralizing drain water generated from exhaust gas of an engine, and an air conditioner equipped with a compressor driven by the engine and the neutralizer.

2. Description of the Related Art

There is known a heat pump type air conditioner in which a compressor is driven by a gas engine. In such an air conditioner, exhaust gas from the gas engine is heat-exchanged in an exhaust gas heat exchanger to be cooled, and further it is sound-muffled by a muffler and then exhausted from an exhaust terminal.

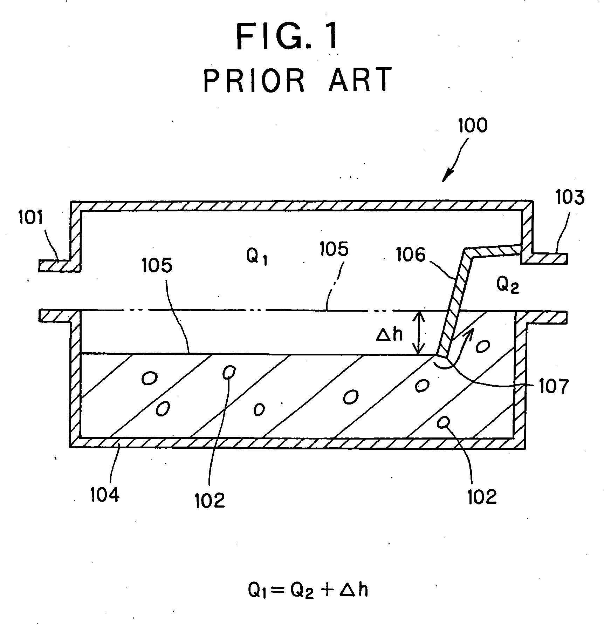

The water in the exhaust gas is condensed into mist in the exhaust gas heat exchanger, and the mist water thus achieved impinges against the muffling plate in the muffler to be converted to drain water. The drain water is acidic because it contains nitrous acid components. Therefore, it is neutralized and exhausted by a neutralizer. As shown in Fig. 1, the drain water introduced from the inlet port 101 of a neutralizer 100 is neutralized by neutralizing agent 102 and then exhausted from an exhaust port 103 to the atmospheric air.

At this time, not only the drain water, but also the exhaust gas is introduced from the inlet port 101 into the neutralizer main body 104, so that the liquid level 105 of the drain water in the neutralizer main body 104 is reduced under the pressure Q1 caused by the exhaust gas in the neutralizer main body 104. A cover 106 is disposed in the neighborhood of the exhaust port 103 in the neutralizer main body 104. Therefore, if the pressure Q1 of the exhaust gas in the neutralizer main body 104 is increased to be larger than the pressure Q2 of the exhaust port 103 intercommunicating with the atmospheric pressure by a water head pressure Δh or more so that the liquid level 105 is lowered beyond the lower edge of the cover 106, the exhaust gas in the neutralizer main body 104 may flow from the lower side of the lower edge 107 of the cover 106 to the exhaust port 103, so that the exhaust gas is exhausted to the outside of the neutralizer 100 together with the drain water.

WO 81/00277 discloses a process for purifying exhaust gases by passing exhaust gases through previously obtained condensate.

A combined muffler and exhaust gas purifier for an internal combustion engine is disclosed in US-A-3,391,521. The exhaust gases are purified by being passed through a purifier having a plurality of filter elements forming a plurality of compartments in the purifier. The pressure in the compartments of the purifier is the same.

SUMMARY OF THE INVENTION

The present invention has been implemented in view of the foregoing situation, and has an object to provide a neutralizer that can prevent exhaust gas of an engine from being exhausted together with drain water, and an air conditioner using the neutralizer.

In order to attain the above object, according to a first aspect of the present invention, there is provided a neutralizer for introducing drain water generated from exhaust gas of an engine from an introducing portion, neutralizing the drain water thus introduced and then discharging the neutralized drain water from a discharging portion, which is characterized by comprising plural pressure chambers that are disposed between the introducing portion and the discharging portion, sequentially reduced in pressure from the introducing portion to the discharging portion and filled with neutralizing agent, the neighboring pressure chambers intercommunicating with each other so that the drain water and the exhaust gas flow therebetween; further comprising upper partition walls each of which extends from the top surface of the neutralizer to the bottom surface of the neutralizer and has an opening at the tip thereof and lower partition walls each of which extends from the bottom surface of the neutralizer to the top surface of the neutralizer and has an opening at the tip thereof, the upper partition walls and the lower partition walls being alternately disposed between the introducing portion and the discharging portion so that the plural pressure chambers are comparted by the upper partition walls and the internal pressure relationship of the pressure chambers is set by varying the heights of the lower partition walls.

In the above neutralizer, the lower partition walls are disposed in the pressure chambers so as to be interposed between the neighboring upper partition walls.

According to a second aspect of the present invention, there is provided an air conditioner having a compressor mounted in an outdoor unit, an engine for driving the compressor and a neutralizer for neutralizing drain water generated from exhaust gas of the engine and discharging the neutralized drain water, which is characterized in that the neutralizer comprises plural pressure chambers that are disposed between the introducing portion and the discharging portion, sequentially reduced in pressure from the introducing portion to the discharging portion and filled with neutralizing agent, the neighboring pressure chambers intercommunicating with each other so that the drain water and the exhaust gas flow therebetween;

the neutralizer further comprising upper partition walls each of which extends from the top surface of the neutralizer to the bottom surface of the neutralizer and has an opening at the tip thereof and lower partition walls each of which extends from the bottom surface of the neutralizer to the top surface of the neutralizer and has an opening at the tip thereof, the upper partition walls and the lower partition walls being alternately disposed between the introducing portion and the discharging portion so that the plural pressure chambers are comparted by the upper partition walls and the internal pressure relationship of the pressure chambers is set by varying the heights of the lower partition walls.

In the above air conditioner, the lower partition walls are disposed in the pressure chambers so as to be interposed between the neighboring upper partition walls.

According to the present invention, the high-pressure engine exhaust gas introduced into the introducing port together with the drain water is passed through the plural pressure chambers while the pressure thereof is successively (gradually or sequentially) reduced, and thus it does not reach the discharging port. Therefore, the exhaust gas can be prevented from being discharged to the outside of the neutralizer together with the drain water.

BRIEF DESCRIPTION OF THE DRAWINGS

Fig. 1 is a longitudinally-sectional view showing a conventional neutralizer;

Fig. 2 is a circuit diagram showing a refrigerant circuit, etc. to which an embodiment of an air conditioner according to the present invention is applied;

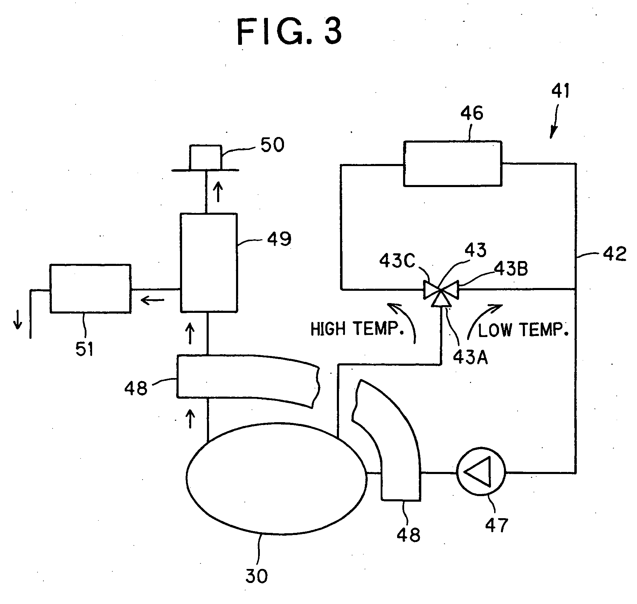

Fig. 3 is a circuit diagram showing the peripheral portion of an engine of Fig. 2;

Fig. 4 is a longitudinally-sectional view showing a neutralizer shown in Fig. 2;

Fig. 5 is an exploded perspective view showing the neutralizer of Fig. 2; and

Fig. 6 is a partially-notched perspective view of Fig. 5.

DETAILED DESCRIPTION OF THE PREFERRED EMBODIMENT

A preferred embodiment according to the present invention will be described hereunder with reference to the accompanying drawings.

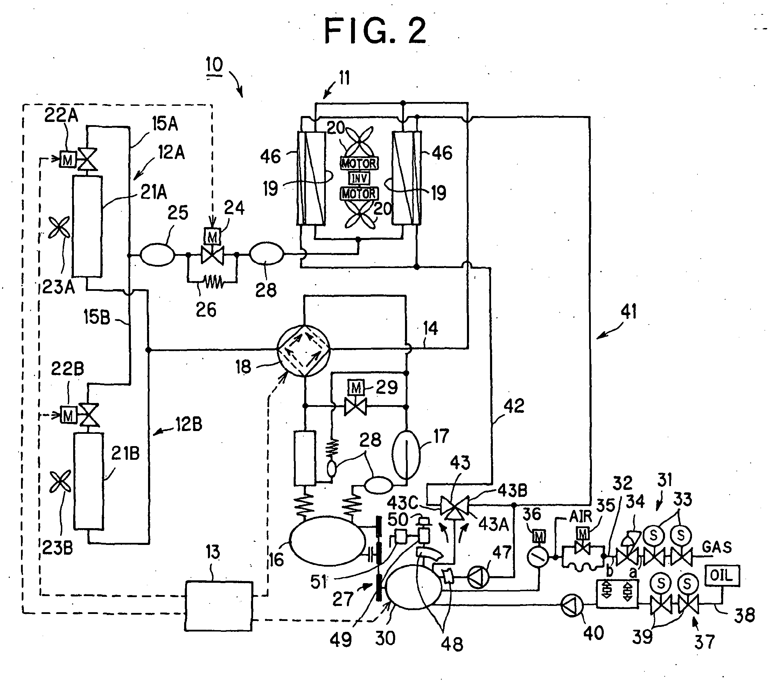

Fig. 2 is a circuit diagram showing a refrigerant circuit of an air conditioner based on a standard specification according to an embodiment of the present invention.

As shown in Fig. 2, a heat pump type air conditioner 10 as a refrigerating machine has an outdoor unit 11, plural (for example, two) indoor units 12A, 12B and a controller 13, and the outdoor refrigerant pipe 14 of the outdoor unit 11 is connected to each of the indoor refrigerant pipes 15A, 15B of the indoor units 12A, 12B, respectively.

The outdoor unit 11 is disposed outdoors, and a compressor 16 is disposed in the outdoor refrigerant pipe 14. Furthermore, an accumulator 17 is disposed at the suction side of the compressor 16 while a four-way valve 18 is disposed at the discharge side of the compressor 16. An outdoor heat exchanger 19, an outdoor expansion valve 24 and a dry core 25 are successively disposed at the side of the four-way valve 18 in this order. In addition, an outdoor fan 20 for blowing air to the outdoor heat exchanger 19 is disposed to be adjacent to the outdoor heat exchanger 19. The compressor 16 is connected to a gas engine 30 through a flexible coupling 27, etc., and driven by the gas engine 30. Furthermore, a bypass pipe 26 is disposed to bypass the outdoor expansion valve 24.

The indoor units 12A, 12B are disposed indoors. Indoor heat exchangers 21A, 21B are disposed in the indoor refrigerant pipes 15A, 15B of the indoor units 12A, 12B respectively, and indoor expansion valves 22A, 22B are disposed in the neighborhood of the indoor heat exchangers 21A, 21B in the indoor refrigerant pipes 15A, 15B respectively. Furthermore, indoor fans 23A, 23B for blowing air to the indoor heat exchangers 21A, 21B are disposed to be adjacent to the indoor heat exchangers 21A, 21B, respectively.

In Fig. 2, reference numeral 28 represents a strainer. Furthermore, reference numeral. 29 represents a bypass valve for bypassing the refrigerant pressure at the discharge side of the compressor 16 to the suction side of the compressor 16.

The controller 13 is disposed in the outdoor unit 11, and controls the driving of the outdoor unit 11 and the indoor units 12A, 12B. Specifically, the controller 13 controls the gas engine 30 (that is, the compressor 16), the four-way valve 18, the outdoor fan 20 and the outdoor expansion valve 24 in the outdoor unit 11, the bypass valve 29, and the indoor expansion valves 22A, 22B and the indoor fans 23A, 23B in the indoor units 12A, 12B, respectively. Furthermore, controller 13 controls a circulating pump 47 of an engine cooling apparatus 41 described later.

The controller 13 switches the four-way valve 18 to set the heat pump type air conditioner 10 to a cooling operation mode or a heating operation mode. That is, when the controller 13 switches the four-way valve 18 to the cooling side, refrigerant flows as indicated by a solid-line arrow and the outdoor heat exchanger 19 serves as a condenser while the indoor heat exchangers 21A, 21B serve as evaporators, thereby setting the air conditioner to the cooling operation state. Accordingly, each of the indoor heat exchangers 21A, 21B cools the room. Furthermore, when the controller 13 switches the four-way valve 18 to the heating side, the refrigerant flows as indicated by a broken-line arrow, and the indoor heat exchangers 21A, 21B serve as condensers while the outdoor heat exchanger 19 serves as an evaporator, thereby setting the air conditioner to the heating operation state. Accordingly, each of the indoor heat exchangers 21A, 21B heats the room.

Under cooling operation, the controller 13 controls the valve opening degrees of the indoor expansion valves 22A, 22B in accordance with the air conditioning load. Under heating operation, the controller 13 controls the valve opening degrees of the outdoor expansion valve 24 and the indoor expansion valves 22A, 22B in accordance with the air conditioning load.

Air-fuel mixture is supplied from an engine fuel supply apparatus 31 into a combustion chamber (not shown) of the gas engine 30 for driving the compressor 16. The engine fuel supply apparatus 31 includes two cutoff valves, a zero governor 34, a fuel flow control valve 35 and an actuator 36 which are successively disposed in this order in a fuel supply pipe 32, and the end portion at the actuator (36) side of the fuel supply pipe 32 is connected to the combustion chamber of the gas engine 30.

The two fuel cutoff valves 33 are disposed in series to form a two-closing type fuel cutoff valve mechanism, and the two fuel cutoff valves 33 are fully closed or fully opened interlockingly with each other to selectively cut off or communicate (feed) fuel gas with no leakage.

The zero governor 34 adjusts the primary side fuel gas pressure (primary pressure a) and the secondary side fuel gas pressure (secondary pressure b) before and after the zero governor 34 in the fuel supply pipe 32 respectively so that the secondary pressure b is equal to a predetermined fixed pressure irrespective of variation of the primary pressure a, thereby stabilizing the operation of the gas engine 30.

The fuel flow control valve 35 adjusts to the optimum value the air-fuel ratio of air-fuel mixture generated by introducing air from the upstream side of the actuator 36. The actuator 36 adjusts the supply amount of the air-fuel mixture supplied to the combustion chamber of the gas engine 30 to control the rotational number of the gas engine 30.

An engine oil supply apparatus 37 is connected to the gas engine 30. The engine oil supply apparatus 37 includes an oil cutoff valve 39, an oil supply pump 40, etc. in an oil supply pipe 38, and supplies engine oil to the gas engine 30 appropriately.

Specifically, the control of the gas engine 30 by the controller 13 is performed through the control of the fuel cutoff valve 33, the zero governor 34, the fuel flow control valve 35 and the actuator 36 of the engine fuel supply apparatus 31 and the oil cutoff valve 39 and the oil supply pump 40 of the engine oil supply apparatus 37 by the controller 13.

The gas engine 30 is cooled by engine cooling water circulated in the engine cooling apparatus 41. As shown in Figs. 1 and 2, the engine cooling apparatus 41 is constructed such that a wax three-way valve 43, a radiator 46 and a circulating pump 47 are successively disposed in a substantially-closed loop type cooling water pipe 42 which is connected to the gas engine 30 through an exhaust gas heat exchanger 48 affixed to the gas engine 30 at one end thereof and directly connected to the gas engine 30 at the other end.

The circulating pump 47 increases the pressure of the engine cooling water under operation to circulate the cooling water in the cooling water pipe 42.

The wax three-way valve 43 heats the gas engine 30 quickly. The inlet port 43A of the wax three-way valve 43 is connected to the gas engine 30 in the cooling water pipe 42, the low-temperature side outlet port 43B thereof is connected to the suction side of the circulating pup 47 in the cooling water pipe 42, and the high-temperature side outlet port 43C is connected to the radiator (43) side in the cooling water pipe 42.

The engine cooling water at about 40°C flows from the discharge side of the circulating pump 47 into the exhaust gas heat exchanger 48 to withdraw the exhaust heat (the heat of the exhaust gas) of the gas engine 30, and then it flows into the gas engine 30 to cool the gas engine, so that the engine cooling water itself is heated to about 80°C. The engine cooling water flowing from the gas engine 30 into the wax three-way valve 43 is returned from the low-temperature side outlet port 43B to the circulating pump 47 to quickly heat the gas engine 30 when the temperature of the engine cooling water is low (for example, less than 80°C), or it flows from the high-temperature outlet port 43C to the radiator 46 when the temperature of the engine cooling water is high (for example, 80°C or more).

The radiator 46 radiates the heat of the engine cooling water to cool the engine cooling water to about 40°C. The engine cooling water cooled by the radiator 46 is returned through the suction side of the circulating pump 47 to the exhaust gas heat exchanger 48 of the gas engine 30, and cools the gas engine 30 again. The radiator 46 is disposed to be adjacent to the outdoor heat exchanger 19 of the air conditioner 10.

When the air conditioner 10 is under cooling or heating operation, the circulating pump 47 of the engine cooling apparatus 41 is actuated to circulate the cooling water, and the engine cooling water thus circulated cools the gas engine 30. The engine cooling water which has cooled the gas engine 30 is heat-radiated in the radiator 46 to be cooled. Particularly when the air conditioner 10 is under heating operation, the heat radiated from the radiator 46 is transferred to the outdoor heat exchanger 19 functioning as an evaporator, and used as a heat source for the evaporator.

The exhaust gas discharged from the gas engine 30 is cooled in the exhaust gas heat exchanger 48. The water contained in the exhaust gas is condensed into mist in the exhaust gas heat exchanger 48, and then fed to a muffler 49. The exhaust gas impinges against a muffling plate (not shown) in the muffler 49 to muffle the sound, and also the mist water impinges against the muffling plate and becomes drain water. The exhaust gas which is muffled while being passed through the muffler 49 is discharged to the atmospheric air through an exhaust terminal 50. Since the drain water generated in the muffler 49 exhibits acidity of nitrous acid group, it is introduced into a neutralizer 51 to be neutralized and then discharged.

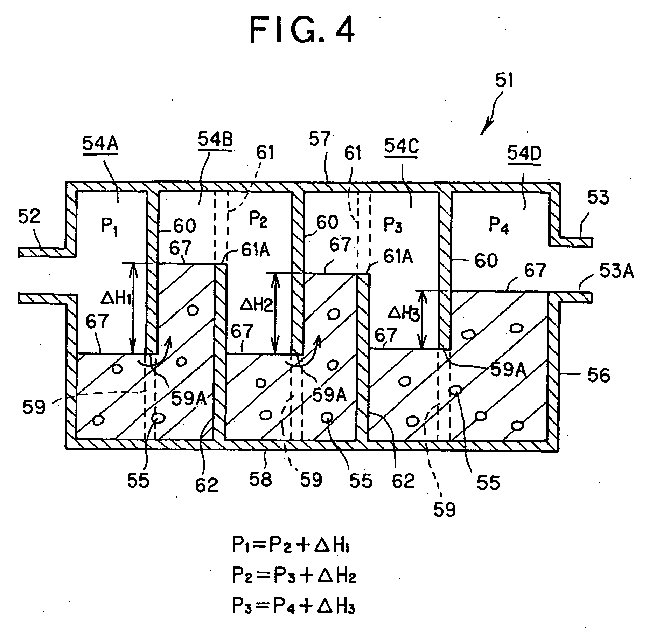

Fig. 4 shows the construction of the neutralizer 51.

As shown in Fig. 4, the neutralizer 51 comprises plural pressure chambers 54A, 54B, 54C, 54D which are successively reduce in pressure to P1, P2, P3, P4 in this order and disposed in a passage extending from an introducing port 52 for introducing the exhaust gas and the drain water to a exhaust port 53 for discharging the drain water. The neutralizer 51 has upper partition walls 60 each of which extends downwardly from the top surface 57 of the neutralizer main body 56 and has an opening 61 at the tip portion thereof and lower partition walls 62 each of which extends upwardly from the bottom surface 58 of the neutralizer main body 56 and has an opening 61 at the tip portion thereof. The upper partition walls 60 and the lower partition walls 62 are disposed alternately between the introducing port 52 and the discharge port 53 so that the inside of the neutralizer is sectioned into the pressure chambers 54A, 54B, 54C, 54D by the upper partition walls 60 and the drain water overflows beyond the upper edges 59A of the openings 59 of the upper partition walls to be stocked in the neutralizer main body 56.

The neighboring pressure chambers 54A, 54B, 54C, 54D are allowed to intercommunicate with one another. Neutralizing agent 55 (for example, calcium carbonate) for neutralizing the acidic drain water is filled in the pressure chambers 54A, 54B, 54C, 54D. Accordingly, the drain water introduced from the muffler 49 to the introduction inlet port 52 is neutralized while passing through the respective openings 59 and flowing into the pressure chambers 54A, 54B, 54C, 54D, and then discharged from the discharge port 53 to the outside (atmospheric air).

When the exhaust gas of the gas engine 30 is introduced from the muffler 49 into the introduction inlet port 52 together with the drain water, the exhaust gas reduces the liquid level 67 in each of the pressure chambers 54A, 54B, 54C, 54D.

The exhaust gas is not reduced in pressure and thus kept at a pressure P 1 in the pressure chamber 54A intercommunicating with the introduction inlet port 52, however, it reduces the liquid level 67 to the upper edge 59A of the opening 59 of the upper partition wall 60 (the upper partition wall 60 through which the pressure chamber 54A and the pressure chamber 54B are comparted). When the exhaust gas further flows into the pressure chamber 54B, the pressure of the exhaust gas is reduced to a pressure P2 in the pressure chamber 54B. The relationship between the pressure P 1 and the pressure P2 is defined by the following equation:

$$P1 = P2 + \Delta H1$$

Here, $\Delta H1$ represents the water head pressure corresponding to the distance between the upper edge 59A of the opening 59 of the upper partition wall 60 for partitioning the pressure chamber 54A and the pressure chamber 54B and the lower edge 61A of the opening 61 of the lower partition wall 62 in the pressure chamber 54B.

When the exhaust gas which is reduced in pressure to the pressure P2 in the pressure chamber 54 reduces the liquid level 67 to the upper edge 59A of the opening 59 of the upper partition wall 60 (the upper partition wall 60 through which the pressure chamber 54B and the pressure chamber 54C are comparted) and thus the exhaust gas under the pressure P2 flows into the pressure chamber 54C, the exhaust gas is reduced in pressure to a pressure P3 in the pressure chamber 54C. The relationship between the pressure P2 and the pressure P3 is defined by the following equation:

$$P2 = P3 + \Delta H2$$

Here, $\Delta H2$ represents the water head pressure corresponding to the distance between the upper edge 59A of the opening 59 of the upper wall 60 for partitioning the pressure chamber 54B and the pressure chamber 54C and the lower edge 61A of the opening 61 of the lower partition wall 62 in the pressure chamber 54C.

Furthermore, when the exhaust gas which is reduced in pressure to the pressure P3 in the pressure chamber 54C reduces the liquid level 67 to the upper edge 59A of the opening 59 of the upper partition wall 60 (the upper partition wall through which the pressure chamber 54C and the pressure chamber 54D are comparted) and thus the exhaust gas under the pressure P3 flows into the pressure chamber 54D, it is reduced in pressure to a pressure P4. The relationship between the pressure P3 and the pressure P4 is defined by the following equation:

$$P3 = P4 + \Delta H3$$

Here, $\Delta H3$ represents the water head pressure corresponding to the distance between the upper edge 59A of the opening 59 of the upper partition wall 60 for partitioning the pressure chamber 54C and the pressure chamber 54D and the lower edge 53A of the discharge port 53.

Accordingly,

$$P1 = P4 + (\Delta H1 + \Delta H2 + \Delta H3)$$

Therefore, if the pressure P1 of the exhaust gas introduced into the pressure chamber 54 through the introduction inlet port 52 is not less than the pressure of the pressure chamber 54D (atmosphere pressure) intercommunicating with the outside air through the discharge port 53 by the pressure corresponding to the total amount of the water head pressures $\Delta H1$, $\Delta H2$ and $\Delta H3$, the exhaust gas introduced into the neutralizer 51 is prevented from flowing from the lower side of the upper edge 59A of the opening 59 of the upper partition wall 60 for partitioning the pressure chamber 54C and the pressure chamber 54D into the pressure chamber 54D, so that the exhaust gas is prevented from being discharged from the discharge port 53.

The internal construction of the neutralizer (the dimensions of the pressure chambers 54A to 54D or the heights of the upper and lower partition walls 60 and 62 and the heights of the introducing port 52 and the discharge outlet port 53) may be designed so that the above pressure conditions of P1, P2, P3, P4 of the pressure chambers are satisfied. For example, in order to satisfy the above pressure conditions of P1, P2, P3, P4, the height of each of the lower partition walls may be adjusted as shown in Fig. 4.

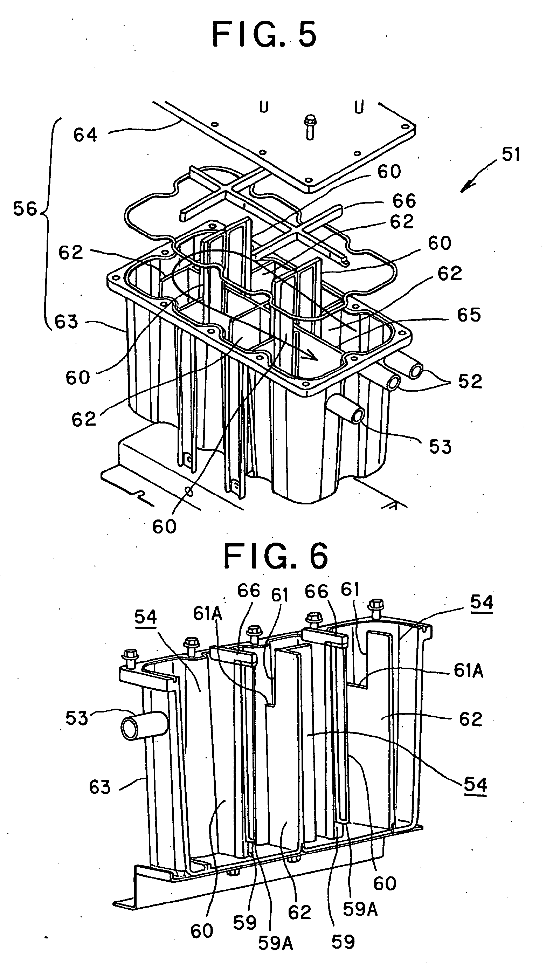

Figs. 5 and 6 shows the construction of the exhaust terminal 50.

As shown in Figs. 5 and 6, the neutralizer main body 56 comprises a main container 63 having an upper opening, and a lid 64 for closing the upper opening of the main container 63. The inside of the main container 63 is partitioned to right and left chambers of Fig. 4 by a partitioning plate 65 except for a part thereof. The upper partition walls 60 and the lower partition walls 62 are alternately disposed in each of the right-side chamber and the left-side chamber, so that each of the right-side chamber and the left-side chamber is partitioned into the plural pressure chambers 54 by the upper wall partitions 60 as described above.

The drain water and the exhaust gas from the muffler 49 are introduced through the introduction inlet port 52 formed in the main container 63 into the neutralizer main body 56, flows through the plural pressure chambers 54 of the right-side chamber and the plural pressure chambers 54 of the left-side chamber as indicated by an arrow and then the drain water is discharged from the discharge port 53. The exhaust gas is sequentially reduced in pressure while passing through the plural pressure chambers 54, and thus it is prevented from being discharged from the discharge port 53.

Reference numeral 66 of Fig. 6 represents a space for holding the upper partition walls 60 between the main container 63 and the lid 64.

According to the above-described embodiment, there can be achieved the following effect.

That is, the neutralizer 51 is equipped with the plural pressure chambers 54A, 54B, 54C, 54D which are sequentially reduced in pressure from the introduction inlet port 52 to the discharge port 53 and filled with neutralizing agent 55, and the neighboring pressure chambers are designed to intercommunicate with each other. Therefore, the high-pressure exhaust gas of the gas engine 30 which is introduced to the introduction inlet port 52 together with the drain water is gradually (or intermittently) reduced in pressure while passing through the plural pressure chambers 54A, 54B, 54C, 54D, and thus it is prevented from reaching the discharge port 53. Therefore, the exhaust gas can be prevented from being discharged to the outside of the neutralizer 51.

The present invention is not limited to the above embodiment, and various modifications may be made to the above embodiment.

According to the neutralizer of the present invention, the exhaust gas of the engine can be prevented from being discharged together with the drain water.

According to the air conditioner having the neutralizer of the present invention, the exhaust gas of the engine can be prevented from being discharged together with the drain water.

## Claims

1. A neutralizer for introducing drain water generated from exhaust gas of an engine from an introducing portion (52), neutralizing the drain water thus introduced and then discharging the neutralized drain water from a discharging portion (53), comprising plural pressure chambers (54A - 54D) that are disposed between said introducing portion (52) and said discharging portion (53), and filled with neutralizing agent, the neighboring pressure chambers intercommunicating with each other so that the drain water and the exhaust gas flow therebetween; further comprising upper partition walls (60) each of which extends from the top surface (57) of said neutralizer to the bottom surface (58) of said neutralizer and has an opening (59) at the tip thereof and lower partition walls (62) each of which extends from the bottom surface (58) of said neutralizer to the top surface (57) of said neutralizer and has an opening (61) at the tip thereof, said upper partition walls (60) and said lower partition walls (62) being alternately disposed between said introducing portion (52) and said discharging portion (53) so that said plural pressure chambers (54A - 54D) are comparted by said upper partition walls (60); *characterized in that* the plural pressure chambers (54A - 54D) are sequentially reduced in pressure from said introducing portion (52) to said discharging portion (53) by varying the heights of said lower partition walls (60).

2. The neutralizer as claimed in claim 1, wherein said lower partition walls (62) are disposed in said pressure chambers so as to be interposed between the neighboring upper partition walls (60).

3. An air conditioner having a compressor (16) mounted in an outdoor unit (11), an engine (30) for driving the compressor (16) and a neutralizer according to claims 1 or 2.

## Patentansprüche

1. Neutralisator zum Einleiten von Abwasser, das aus Abgas einer Maschine erzeugt wurde, von einem Einleitungsbereich (52), Neutralisieren des so eingeleiteten Abwassers und dann Auslassen des neutralisierten Abwassers aus einem Auslassbereich (53), der mehrere Druckkammern (54A - 54D) umfasst, die zwischen dem Einleitungsbereich (52) und dem Auslassbereich (53) angeordnet und mit einem Neutralisationsmittel gefüllt sind, wobei die benachbarten Druckkammern miteinander in gegenseitiger Verbindung stehen, so dass das Abwasser und das Abgas dazwischen fließen;
   weiter umfassend obere Trennwände (60), von denen sich jede von der oberen Oberfläche (57) des Neutralisators zu der Bodenoberfläche (58) des Neutralisators erstreckt und eine Öffnung (59) an deren Spitze aufweist, und untere Trennwände (62), von denen sich jede von der Bodenoberfläche (58) des Neutralisators zu der oberen Oberfläche (57) des Neutralisators erstreckt und eine Öffnung (61) an deren Spitze aufweist, wobei die oberen Trennwände (60) und die unteren Trennwände (62) abwechselnd zwischen dem Einleitungsbereich (52) und dem Auslassbereich (53) angeordnet sind, so dass die mehreren Druckkammern (54A - 54D) durch die oberen Trennwände (60) unterteilt sind; **dadurch gekennzeichnet, dass** die mehreren Druckkammern (54A - 54D) von dem Einleitungsbereich (52) dem Auslassbereich (53) durch Variieren der Höhen der unteren Trennwände (60) im Druck der Reihe nach verringert sind.

2. Neutralisator gemäß Anspruch 1, wobei die unteren Trennwände (62) in den Druckkammern so angeordnet sind, dass sie zwischen den benachbarten oberen Trennwänden (60) eingefügt sind.

3. Klimaanlage mit einem Kompressor (16), der in einer Außeneinheit (11) angebracht ist, einer Maschine (30) zum Antrieb des Kompressors (16) und einem Neutralisator gemäß Anspruch 1 oder 2.

## Revendications

1. Neutraliseur pour introduire l'eau de condensation ou de purge provenant des gaz d'échappement d'un moteur dans une partie d'introduction (52), neutraliser l'eau de purge ainsi introduite puis rejeter l'eau de purge neutralisée à une partie d'évacuation (53), comprenant plusieurs chambres de pression (54A-54D) qui sont disposées entre la dite partie d'introduction (52) et la dite partie d'évacuation (53) et chargées avec un agent de neutralisation, les chambres de pression voisines étant en communication mutuelle de sorte que l'eau de purge et les gaz d'échappement circulent entre elles ;
   comprenant en outre des cloisons supérieures (60) dont chacune s'étend de la surface supérieure (57) du dit neutraliseur à la surface inférieure (58) du dit neutraliseur et comporte une ouverture (59) à son extrémité, et des cloisons inférieures (62) dont chacune s'étend de la surface inférieure (58) du dit neutraliseur à la surface supérieure (57) du dit neutraliseur et comporte une ouverture (61) à son extrémité, les dites cloisons supérieures (60) et les dites cloisons inférieures (62) étant disposées en alternance entre la dite partie d'introduction (52) et la dite partie d'évacuation (53) de sorte que les dites plusieurs chambres de pression (54A-54D) sont séparées par les dites cloisons supérieures (60), ;
   **caractérisé en ce que** les dites plusieurs chambres de pression (54A-54D) diminuent séquentiellement de pression en allant de la dite partie d'introduction (52) à la dite partie d'évacuation (53), par modification des hauteurs des dites cloisons inférieures (62).

2. Neutraliseur selon la revendication 1, dans lequel les dites cloisons inférieures (62) sont disposées dans les dites chambres de pression de façon à être interposées entre les cloisons supérieures voisines (60).

3. Climatiseur comprenant un compresseur (16) monté dans une unité extérieure (11), un moteur (30) pour entraîner le compresseur (16), et un neutraliseur selon les revendications 1 ou 2.

# FIG. 1
## PRIOR ART

$$Q_1 = Q_2 + \triangle h$$

# FIG. 2

# FIG. 3

# FIG. 4

$$P_1 = P_2 + \triangle H_1$$
$$P_2 = P_3 + \triangle H_2$$
$$P_3 = P_4 + \triangle H_3$$

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8100277 A
- US 3391521 A